# EUROPEAN PATENT SPECIFICATION

(11) **EP 3 082 396 B1**
(45) Date of publication and mention of the grant of the patent: **18.07.2018**
(21) Application number: 13899596.4
(22) Date of filing: 16.12.2013
(51) Int. Cl.: A01D 34/90, B25F 5/02, B25G 3/38

(54) **HANDLE ARRANGEMENT FOR A POWER TOOL**
GRIFFANORDNUNG FÜR EIN ELEKTROWERKZEUG
AGENCEMENT DE POIGNÉE POUR OUTIL ÉLECTRIQUE

(43) Date of publication of application: 26.10.2016
(73) Proprietor: Husqvarna AB, 561 82 Huskvarna (SE)
(72) Inventor: CHRISTENSSON, Pär, SE-33191 Värnamo (SE)
(86) International application number: PCT/SE2013/051517
(87) International publication number: WO 2015/094027

(56) References cited:
- EP-A1- 1 232 681
- EP-A2- 1 327 502
- WO-A1-2006/004515
- WO-A1-2007/091925
- DE-A1- 19 843 157
- GB-A- 2 430 342
- JP-A- H10 108 520
- US-A- 4 288 171
- US-A1- 2009 277 021
- US-A1- 2010 132 163
- US-A1- 2011 302 893

## Description

### TECHNICAL FIELD

Example embodiments generally relate to hand-held, outdoor power equipment and, more particularly, relate to a handle that can be folded or otherwise positioned relatively easily and with a high degree of flexibility.

### BACKGROUND

Handheld outdoor power devices such as trimmers, blowers, chainsaws, and/or the like, are often used to perform tasks relating to yard/grounds maintenance or even commercial resource harvesting activities that require them to be mobile. Although there are several options for structuring such devices, there are certain dominant structures that are generally associated with each device. As an example, chainsaws typically have a bar and rotatable chain positioned forward of the motor housing, and the handles are positioned at top and rear portions of the housing. Blowers often include a tube having a handle positioned at a middle to rear portion of the tube. Trimmers, particularly trimmers that have rotatable cutting heads, e.g. string trimmers, typically have the cutting head positioned at one end of a pole or other elongated member and handles, controls and the motor positioned along the elongated member at any desirable location.

An advantage of positioning the working assembly of a trimmer at the front end of such a device, while positioning the handles along the elongated member is that the operator can stand normally while carrying and operating the trimmer to cut vegetation near ground level. Although some trimmers are designed so that both handles (e.g., front and rear handles) are positioned along the longitudinal centerline of the device, some operators may prefer a different structure. As an example of such a structure, some trimmers have been designed to have handlebars that extend away from the longitudinal centerline of the device. Some operators may prefer this structure, and may feel like it gives them improved control and/or a better posture while working. However, relative to a typical design in which both handles are substantially situated along the longitudinal centerline of the device, a handlebar structure with handles displaced from the centerline may generally consume more space.

To improve upon this situation, devices were developed that allow the handles to be folded to an in-line position. However, the mechanisms by which such folding is enabled may be cumbersome and/or complicated to operate.

EP-1327502-A2 shows a transverse handle for an elongated tool. The handle is connected to the elongated tool with a mounting device that permits the handle to be pivoted between at least two positions: a stowed position, in which the handle is clamped and oriented approximately in the same direction as the elongated tool, and an operating position, in which it is clamped in a transverse orientation to the elongated tool.

DE-19843157-A1 describes a security arrangement for a tool with an output capacity setting system controlling the power to the tool, and a brake operating system for stopping the movement of the tool.

US-2010/132163-A1 describes a pipe handle holding structure with a round pipe-shaped bar handle, and a holder for holding an external peripheral surface of the bar handle. The holder has a plurality of concealing parts for concealing the external peripheral surface of the bar handle and elastically deforming the external peripheral surface in a pipe diameter direction.

US-2011/302893-A1 describes a lawnmower, including a cutting device attached to a chassis. A handle is connected to the chassis and includes a handle body positioned above and behind the cutting device.

WO-2006/004515-A1 describes an arrangement for securing a handle bar to a portable tool with a tube. A handle bar is secured to the tube with a holding device between the tube and the handle bar. A sleeve is fixed to the tube and has an outside with a non-circular shape. The sleeve is surrounded by a layer of an elastic material and the holding device.

### SUMMARY OF INVENTION

The example embodiments provide an outdoor power device that can be shifted between an in-line configuration for storage and an operating configuration with handles displaced from the longitudinal centerline of the device with relative ease. Accordingly, the embodiments provide for improved ability to transport, store and/or use such devices with relatively little complication associated with switching between different configurations. The movements of the parts involved is easily initiated and intuitive to appreciate. Thus, the operator further enjoys the flexibility and utility of the device.

### BRIEF SUMMARY OF SOME EXAMPLES

In one example embodiment, a handheld device is provided. The handheld device includes a support shaft, a power source, a working assembly operably coupled to the support shaft and powered by the power source to facilitate performance of a working function of the handheld device, and a handle assembly operably coupled to the support shaft. The handle assembly is operably coupled to the support shaft, includes a handlebar coupling a first handle disposed at one end of the handlebar and a second handle disposed at an opposing end of the handlebar, a handlebar coupler rotatably coupling the support shaft and the handle assembly, and a locking lever. The handlebar coupler is configured to selectively enable rotation of the handlebar about a first axis and a second axis based on a position of the locking lever. The handlebar coupler enables rotation of the handlebar about the first axis between an operating position in which a line between the first and second handles is more than about thirty degrees out of alignment with the support shaft and a transport position in which the line between the first and second handles is less than about thirty degrees out of alignment with the support shaft. The first axis is substantially orthogonal to the second axis. The handlebar is further enabled to slide along the second axis based on a position of the locking lever. The locking lever comprises a cam portion housing an axis of rotation of the locking lever and an arm portion extending away from the cam portion, and responsive to rotation of the locking lever about the axis of rotation, the cam portion exerts different pressures on the clamp portion of the handlebar coupler to alternately lock and unlock the handlebar coupler. A steering tower extending substantially orthogonal to the support shaft defining the first axis, the handlebar coupler being supported at a distal end of the steering tower. An arm portion extends substantially along the steering tower when the locking lever locks the handlebar coupler, and the arm portion is rotated about the axis of rotation to be spaced apart from the steering tower when the locking lever unlocks the handlebar coupler. The locking lever unlocks the handlebar coupler in stages including a first stage in which rotation about the second axis is enabled, and a second stage in which rotation about the first axis is enabled. The locking lever unlocks the handlebar coupler in stages including a first stage in which rotation about and sliding along the second axis are enabled, and a second stage in which rotation about the first axis is enabled. The locking lever is rotated about 45 degrees away from alignment with the first axis to the first stage and is rotated at least 90 degrees away from alignment with the first axis to the second stage. A biasing element is provided to facilitate rotation of the handlebar about at least one of the first axis or the second axis. A first biasing element is provided to facilitate rotation of the handlebar about the first axis and a second biasing element is provided to facilitate rotation of the handlebar about the second axis. a first spring is provided coaxial with the first axis to facilitate rotation of the handlebar about the first axis from a transport position to an operating position.

A first biasing element is provided to facilitate rotation of the handlebar about the first axis and a second biasing element is provided to facilitate rotation of the handlebar about the second axis. A first spring is provided coaxial with the first axis to facilitate rotation of the handlebar about the first axis from a transport position to an operating position, a second spring is provided coaxial with the second axis to facilitate rotation of the handlebar about the second axis from a rotated position to an operator selected rest position. A first spring is provided coaxial with the first axis to facilitate rotation of the handlebar about the first axis from a transport position to an operating position and wherein a second spring is provided coaxial with the second axis to facilitate rotation of the handlebar about the second axis from a rotated position to an operator selected rest position. The working assembly comprises a cutting head of a trimmer, the handlebar further comprises an adjustable stop positioned thereon, the adjustable stop being fixable at an operator selected location of the handlebar between the handles to define a lateral limit for sliding of the handlebar along the second axis. The handlebar might comprise an adjustable stop positioned thereon, the adjustable stop being fixable at an operator selected location of the handlebar between the handles, and a biasing element is provided to engage the adjustable stop and a portion of the handlebar to bias the handlebar away from a rotated position to a rest position in which the first and second handles are oriented for operator gripping during operation of the handheld device. The handlebar is substantially straight extending between the first and second handles, and wherein the first and second handles extend substantially orthogonally away from the handlebar. The handlebar rotates substantially within a plane that is parallel to the support shaft.

In another example embodiment, a handle assembly for a handheld device that employs a working assembly operably coupled to a support shaft and powered by a power source to facilitate performance of a working function via operation of the working assembly is provided. The handle assembly may include a handlebar coupling a first handle disposed at one end of the handlebar and a second handle disposed at an opposing end of the handlebar, a handlebar coupler rotatably coupling the support shaft and the handle assembly, and a locking lever. The handlebar coupler may selectively enable rotation of the handlebar about a first axis and a second axis based on a position of the locking lever. The handlebar coupler enables rotation of the handlebar about the first axis between an operating position in which a line between the first and second handles is more than about thirty degrees out of alignment with the support shaft and a transport position in which the line between the first and second handles is less than about thirty degrees out of alignment with the support shaft. The first axis is substantially orthogonal to the second axis. the handlebar is further enabled to slide along the second axis based on a position of the locking lever. The handle assembly comprises a steering tower extending substantially orthogonal to the support shaft defining the first axis, the handlebar coupler being supported at a distal end of the steering tower. The locking lever comprises a cam portion housing an axis of rotation of the locking lever and an arm portion extending away from the cam portion, and wherein, responsive to rotation of the locking lever about the axis of rotation, the cam portion exerts different pressures on a clamp portion of the handlebar coupler to alternately lock and unlock the handlebar coupler. The arm portion extends substantially along the steering tower when the locking lever locks the handlebar coupler, and wherein the arm portion is rotated about the axis of rotation to be spaced apart from the steering tower when the locking lever unlocks the handlebar coupler. The locking lever unlocks the handlebar coupler in stages including a first stage in which rotation about the second axis is enabled, and a second stage in which rotation about the first axis is enabled. The locking lever unlocks the handlebar coupler in stages including a first stage in which rotation about and sliding along the second axis are enabled, and a second stage in which rotation about the first axis is enabled, the locking lever is rotated about 45 degrees away from alignment with the first axis to the first stage and is rotated at least 90 degrees away from alignment with the first axis to the second stage. A biasing element is provided to facilitate rotation of the handlebar about at least one of the first axis or the second axis. A first biasing element is provided to facilitate rotation of the handlebar about the first axis and a second biasing element is provided to facilitate rotation of the handlebar about the second axis. A first spring is provided coaxial with the first axis to facilitate rotation of the handlebar about the first axis from a transport position to an operating position. A second spring is provided coaxial with the second axis to facilitate rotation of the handlebar about the second axis from a rotated position to an operator selected rest position. The first spring is provided coaxial with the first axis to facilitate rotation of the handlebar about the first axis from a transport position to an operating position and the second spring is provided coaxial with the second axis to facilitate rotation of the handlebar about the second axis from a rotated position to an operator selected rest position. The handlebar might comprise an adjustable stop positioned thereon, the adjustable stop being fixable at an operator selected location of the handlebar between the handles to define a lateral limit for sliding of the handlebar along the second axis.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a perspective view of an operator carrying a trimmer that may be configured in accordance with an example embodiment;
FIG. 2 illustrates a perspective view of the trimmer according to an example embodiment;
FIG. 3 illustrates a handle coupler of the trimmer of FIGS. 1 and 2 in order to illustrate two respective positions into which the handle assembly of the trimmer may be placed according to an example embodiment;
FIG. 4 illustrates an isolated perspective view of a steering tower of the handle coupler in accordance with an example embodiment;
FIG. 5 illustrates an isolated perspective view of a clamp portion of the handle coupler in accordance with an example embodiment;
FIG. 6 illustrates an isolated perspective view of a locking lever of the handle coupler in accordance with an example embodiment;
FIG. 7 illustrates a fully assembled perspective view of the handle coupler in accordance with an example embodiment;
FIG. 8 illustrates a front view of the fully assembled handle coupler in accordance with an example embodiment; and
FIG. 9 illustrates a cross section view of the fully assembled handle coupler of FIG. 8 in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. One of skill in the art will appreciate the normal position in which devices of example embodiments are held for operation and that the working assembly represents the front of such devices. All other directional references should be understood in this general context.

Some example embodiments described herein provide a relatively easy and simple way for an operator of a handheld device to change the position and/or orientation of the handles of the device. In this regard, for example, the operator may be enabled to fold the handles between an operating position and a transport or storage position by using a lever that is operable with one hand. The operator can make adjustments without using tools and without requiring two hands to operate the locking means itself. Unlike other methods for locking handlebars, which often require a tool to loosen or tighten a nut, or which require the operator to engage in complex and difficult two handed manipulations of components, example embodiments provide for an intuitive and easily operable way to change the position of the handles.

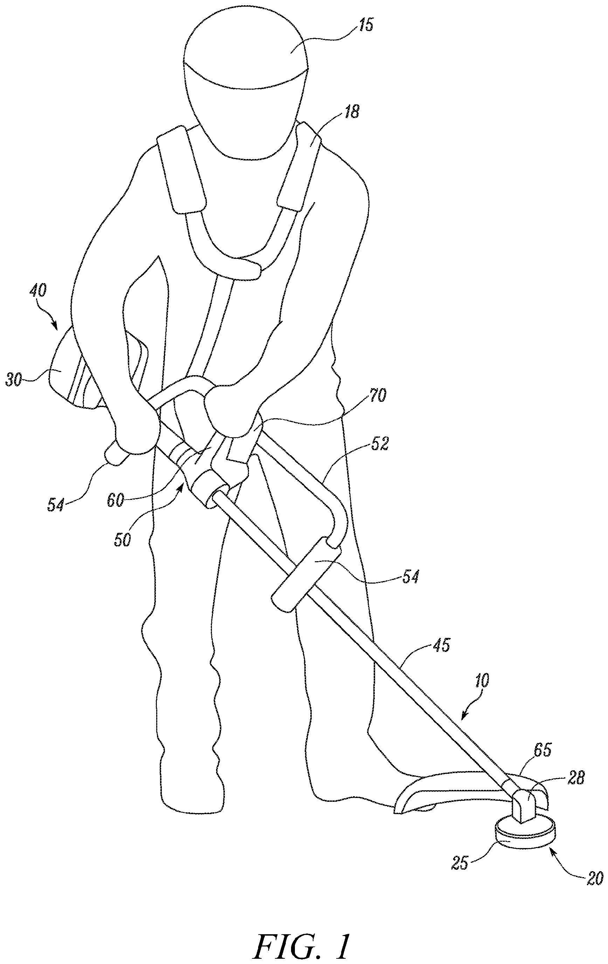

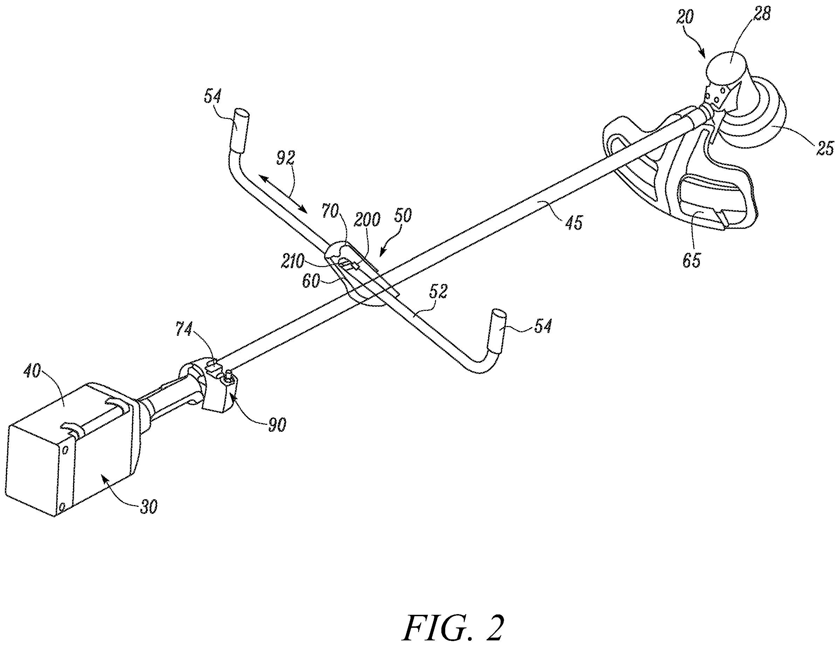

Referring to the drawings, FIGS. 1 and 2 show an electric powered trimmer 10 that is configured in accordance with an example embodiment. However, it should be appreciated that the trimmer 10 is merely one example of an electric powered, outdoor power device that is configured in accordance with an example embodiment. Thus, for example, some embodiments may be practiced in connection with other outdoor power devices such as edgers, brush cutters, and/or the like. It should also be appreciated that the trimmer 10 of FIGS. 1 and 2 is a battery powered device. However, example embodiments could alternatively be employed in connection with corded versions of various electric powered, outdoor power devices. Moreover, in some cases, example embodiments could also be practiced in connection with combustion engines. Thus, although an example embodiment will be described hereinafter with specific reference to the battery powered trimmer 10 of FIGS. 1 and 2, the applicability of alternative embodiments relative to other types of devices should be well understood. Moreover, as used herein, the term "power source" should be understood to represent either electric motors, combustion engines or any other suitable motive force for turning a cutting head or working assembly.

In an example embodiment, the motor may be a DC motor or a brushless DC motor (BLDC) that is powered by the battery pack 30. The motor may be configured to turn in a selected direction based on a switch position of a power switch 74 disposed at a portion of the casing 40, at one of the handles 54, or at another portion of the trimmer 10. In the example of FIGS. 1 and 2, the power switch 74 may be provided at a control panel or control assembly 90 that may be positioned proximate to the battery pack 30. However, the control assembly 90 could be positioned at any of a number of other locations on the trimmer 10 in alternative embodiments.

As shown in FIGS. 1 and 2, the trimmer 10 may be operated by an operator 15 and may, in some cases, be further supported upon the operator by a strap 18. The strap 18, however, is not necessary, as shown in FIG. 2. The trimmer 10 may include a working implement or working assembly 20, which in this example includes a cutting head 25 that supports a trimmer line. It should be appreciated, however, that the trimmer line could be replaced with one or more blades or other cutting elements in alternative embodiments. In some cases, the working assembly 20 further includes a motor (e.g., an electric motor) disposed in a housing 28 of the working assembly 20.

The motor of the trimmer 10 may be powered, according to this example, by a battery pack 30. The battery pack 30 is received into a battery compartment of the trimmer 10. The battery compartment may be a recess or cavity formed in a casing 40 of the trimmer 10 disposed at one end of an elongated member or support shaft 45 that may further include the working assembly 20 at an opposite end thereof. It should be appreciated, however, that motors, batteries, handlebars and the like may be positioned at any of various locations along the support shaft 45. Thus, the specific positions shown in the Figures are merely examples.

The support shaft 45 may be a hollow tube, a pipe, a rod or other such member that may be straight or curved in different embodiments. The support shaft 45 may provide operable communication between the working assembly 20 and the battery pack 30 so that the battery pack 30 can power the working assembly 20. In some embodiments, the casing 40 may be formed from one or more plastic or other rigid components that may be molded to have a desired shape. The casing 40 may substantially enclose the battery compartment, control circuitry and/or other components associated with powering and/or controlling the operation of the trimmer 10.

The trimmer 10 may further employ a trim shield 65 that is configured to prevent cut materials and/or debris from coming back at the operator. In an example embodiment, the trim shield 65 may be configured to be substantially symmetrical relative to an axis defined by the elongated member. However, the trim shield 65 may take any desirable form including asymmetric structures that may be designed based on the direction of rotation of the cutting head 25. The trim shield 65 may be configured to the clippings/debris that are generated by rotation of the cutting head 25 substantially perpendicularly away from the work assembly 20 with respect to the longitudinal axis of the trimmer 10. In some cases, the trim shield 65 may be rotated at least to some degree in order to allow the operator to at least partially control the direction at which clippings/debris are ejected by adjusting a position of the trim shield 65.

In an example embodiment, the trimmer 10 includes a handle assembly 50, which further includes a handlebar 52, with a corresponding set of handles 54 for right and left hands of the operator 15. The handles 54 are generally disposed at opposite ends of the handlebar 52. Moreover, the handles 54, which includes a first handle and a second handle, may each be provided to extend substantially perpendicularly away from a line between the first and second handles and, in some cases, also perpendicularly relative to the bar of the handlebar 52 that extends between the handles 54.

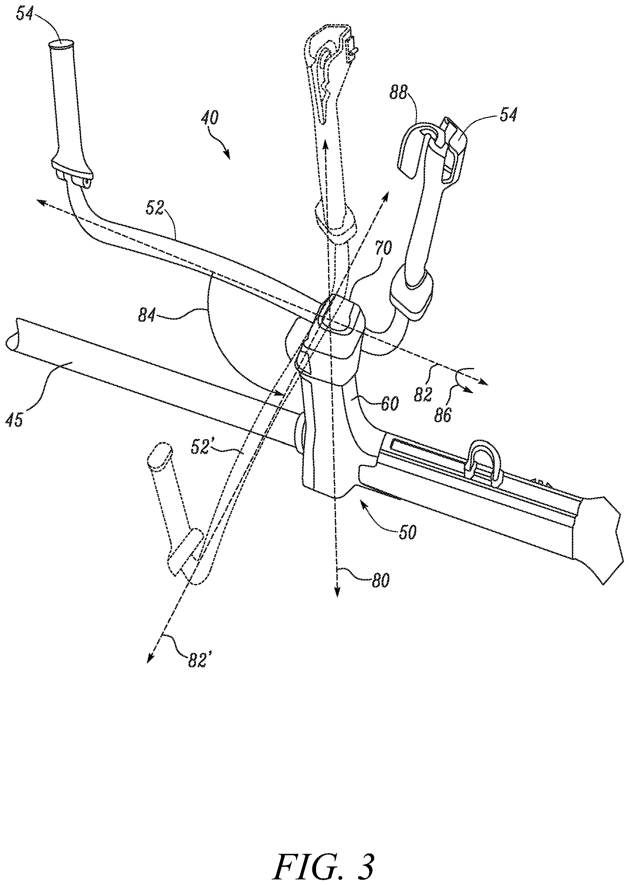

In some embodiments, the handle assembly 50 may include a handlebar coupler 60 that is configured to rotatably couple the support shaft 45 and the handlebar 52. FIG. 3 illustrates a close-up view of the handle assembly 50 to show an example of the different rotational axes about which the handle assembly 50 may be rotated in accordance with an example embodiment. The handle assembly 50 also includes a locking lever 70. In an example embodiment, the handlebar coupler 60 is configured to selectively enable rotation of the handlebar 52 about a first axis 80 and a second axis 82 based on a position of the locking lever 70. As can be appreciated from the Figures (especially FIG. 3), the first axis 80 may be an axis that is substantially orthogonal to the longitudinal centerline (and perhaps also the support shaft 45) of the trimmer 10. Meanwhile, although not required, the first axis 80 may be substantially orthogonal to the second axis 82. The first axis 80 may be substantially aligned with a longitudinal centerline of the handlebar coupler 60 and may remain fixed. However, given that the handlebar 52 may be rotated about the first axis 80, it should be appreciated that the second axis 82 is in a range from being aligned such that it is substantially parallel to the longitudinal centerline of the trimmer 10 to being substantially perpendicular to the longitudinal centerline of the trimmer 10, while always remaining substantially orthogonal to the longitudinal centerline of the handlebar coupler 60 and/or the first axis 80.

Accordingly, the handle assembly 50 may be rotatable between an operating position and a transport or storage position. In this regard, for example, the handlebar coupler 60 may be operable based on a position of the locking lever 70 to enable rotation of the handlebar 52 about the first axis 80 between the operating position in which a line between the handles 54 is more than about thirty degrees out of alignment with the support shaft 45 and a transport position in which the line between the handles 54 is less than about thirty degrees out of alignment with the support shaft 45. In FIG. 3, handlebar 52, handles 54 and the second axis 82 are shown in alignment with each other in the transport position. However, rotation of the handlebar 52' about the first axis 80 results in the second axis 82 being realigned to the operating position as indicated by second axis 82'. The direction of rotation is shown by arrow 84. Meanwhile, rotation about the second axis 82 is also possible to rotate the orientation of the handles 54 as shown by arrow 86. In some embodiments, one of the handles 54 includes a trigger 88 or other control mechanism for engaging operation of the power source to power the working assembly 20.

In an example embodiment, in addition to permitting rotation of the handlebar about the second axis 82 (i.e., as shown by arrow 86), the entire handlebar 52 may be translated along the second axis 82 as shown by the dual directional arrow 92 (shown in FIG. 2) based on a position of the locking lever 70. In some embodiments, the locking lever 70 may have two positions including a locked position and an unlocked position. When the locking lever 70 is in the locked position, rotational and translational movement of the handlebar 52 relative to the second axis 82 and rotational movement of the handlebar 52 relative to the first axis 80 may be prevented. However, when the locking lever 70 is in the unlocked position, rotational and translational movement of the handlebar 52 relative to the second axis 82 and rotational movement of the handlebar 52 relative to the first axis 80 may be allowed. The operator 15 may therefore position the handlebar 52 as desired when the locking lever 70 is in the unlocked position and then lock the locking lever 70 to prevent further movement.

In an alternative embodiment, the locking lever 70 has an intermediate position, or at least one (and perhaps more) additional position between the locked position and the unlocked position. For example, in some cases, the locked and unlocked positions may be as described above. However, in the intermediate position, movement relative to only one of the first axis 80 or the second axis 82 may be enabled. Thus, for example, in the intermediate position (e.g., a position of the locking lever 70 that is half way or at least in between the locked and unlocked positions), the operator 15 may rotate the handlebar 52 about the second axis 82 or translate the handlebar 52 along the second axis 82, but rotation about the first axis 80 may be prevented. It is also possible that the intermediate position (or a second intermediate position) may provide for rotation about the first axis 80, while the handlebar 52 is simultaneously locked relative to movement (rotational and translational) relative to the second axis 82.

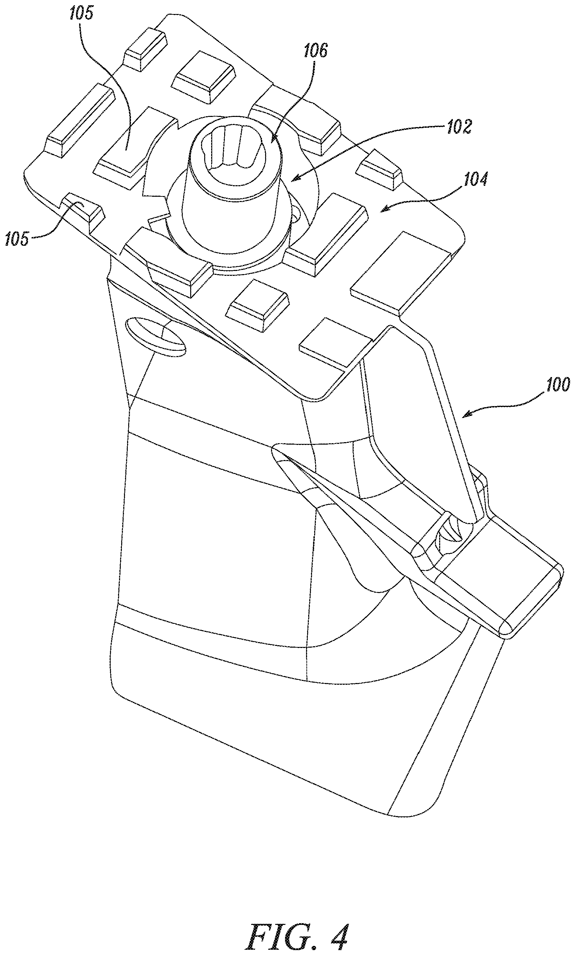

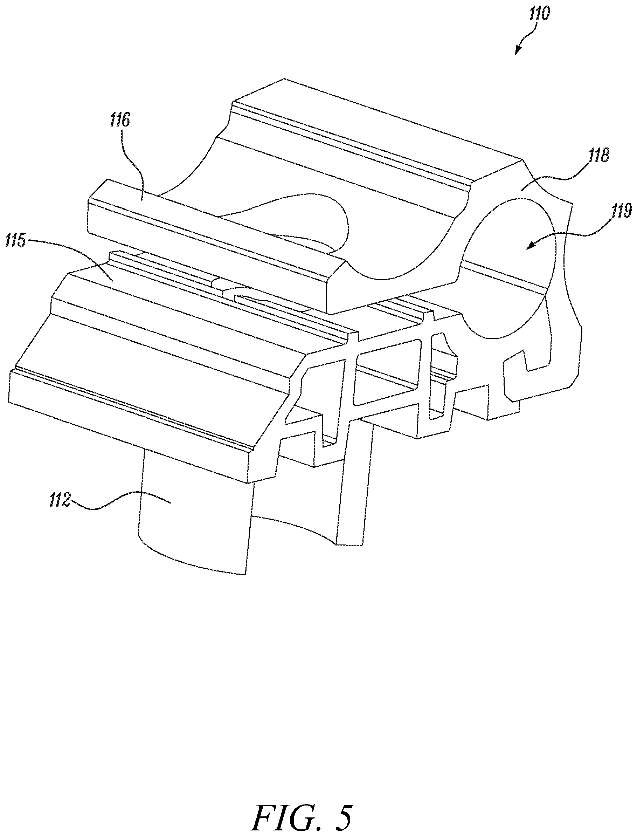

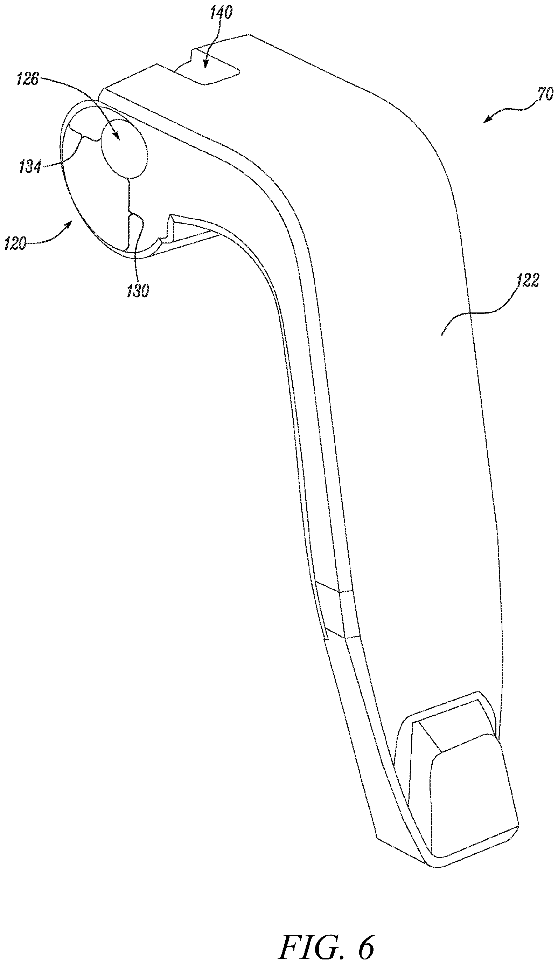

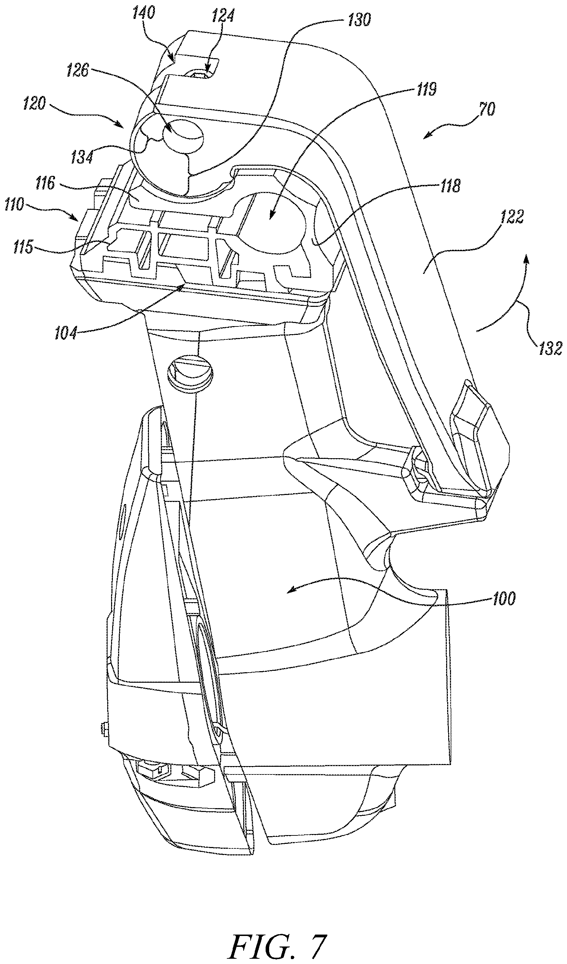

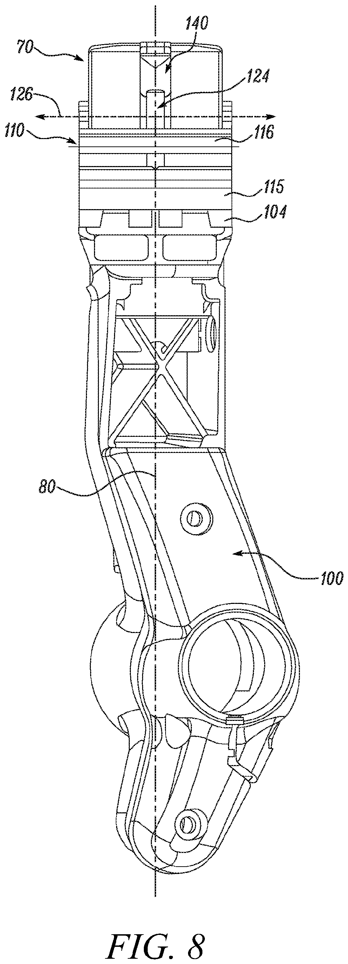

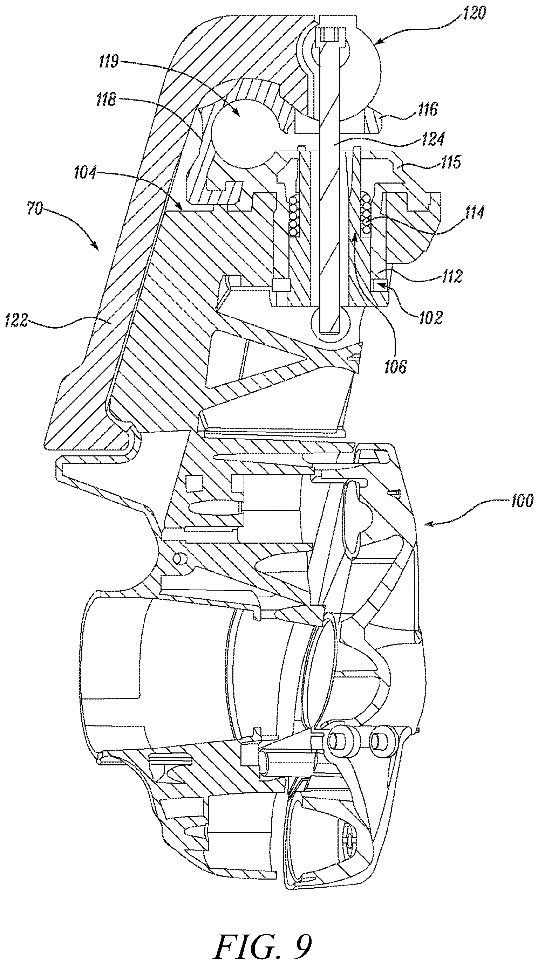

Although the handle coupler 60 may take any number of different forms, FIGS. 4 to 9 will be used to illustrate one example embodiment. In this regard, FIG. 4 illustrates an isolated perspective view of a steering tower 100 of the handle coupler 60 in accordance with an example embodiment. FIG. 5 illustrates an isolated perspective view of the clamp portion 110 of the handle coupler 60 in accordance with an example embodiment. FIG. 6 illustrates an isolated perspective view of the locking lever 70 of the handle coupler 60 in accordance with an example embodiment. FIG. 7 illustrates a fully assembled perspective view of the handle coupler 60. FIG. 8 illustrates a front view of the fully assembled handle coupler 60 and FIG. 9 illustrates a cross section view of the fully assembled handle coupler 60 of FIG. 8 in accordance with an example embodiment.

Referring to FIGS. 4-9, the handle coupler 60 may include the steering tower 100, which may represent a structure that is extending substantially orthogonal to the support shaft 45 to define the first axis 80. The steering tower 100 may include a receiving slot 102 disposed in a base portion 104 that forms a top portion of the steering tower 100 distally located relative to the support shaft 45. The base portion 104 may lie in a plane that is substantially parallel to the plane in which the second axes 82 lies. In some cases, the base portion 104 may include a plurality of protrusions 105 extending orthogonal to a surface of the base portion 104. Meanwhile, the receiving slot 102 may extend partially around a periphery of a rotational hub 106 that extends substantially perpendicularly away from the base portion 104 to form a hub or rotational axis about which a clamp portion 110 of the handle coupler 60 may be rotated. The rotational hub 106 defines the first axis 80.

In an example embodiment, the clamp portion 110 is supported at a distal end of the steering tower 100 (e.g., on the base portion 104) to grip and hold the handlebar 52 based on a position of the locking lever 70. The clamp portion 110 may therefore be operably coupled to the steering tower 100 so that, although the steering tower 100 is fixed relative to the support shaft 45, the clamp portion 110 is rotatable about the first axis 80 when the locking lever 70 is not in the locked position (in which case it should be understood that the locked position corresponds to the locking lever 70 being folded to be proximate to the steering tower 100). The clamp portion 110 may include hub portion 112 that extends downward from the clamp portion 110 into the arcuate shaped receiving slot 102 at the base portion 104 disposed at the distal end of the steering tower 100 (relative to the support shaft 45). The receiving slot 102 may be shaped to receive the hub portion 112 and the hub portion 112 may define a "C-shape". In this example, the rotational hub 106 isreceived inside the hub portion 112 as the hub portion 112 extends into the receiving slot 102. The hub portion 112 may then rotate within the receiving slot 102 until the respective ends of the C-shaped hub portion 112 hit a corresponding end of the receiving slot 102. Accordingly, the hub portion 112 may be limited in its range of motion by the length of the C-shape and the length of the receiving slot 102. In an example embodiment, the corresponding lengths may be selected so that the range of motion is about 90 degrees or in a range from 60 degrees to 120 degrees.

Moreover, in an example embodiment (as shown in FIG. 9), it is possible to provide a biasing element (such as a torsion spring 114) that can bias the clamp portion 110 relative to the steering tower 100 so that the handlebars 52 are biased relative to rotation about the first axis 80 into either (or both) of the operating position or the transport position. In some cases, rather than using a torsion spring, one or more compression springs may be provided and oriented to push against a corresponding end of the hub portion 112 to similarly bias the hub portion 112 relative to a respective end of the receiving slot 102.

The clamp portion 110 may include a base 115, a top 116 and a bar clamp 118. The base 115 may be disposed above the hub portion 112 and may be shaped to interface with the base portion 104 of the steering tower 100 as the hub portion 112 rotates in the receiving slot 102. The interface permits the base 115 to rotate relative to the base portion 104 when the locking lever 70 is in the unlocked position, and prevents rotation of the base 115 relative to the base portion 104 when the locking lever 70 is in the locked position. Thus, the base 115 may be fixed relative to the base portion 104 when the locking lever 70 is in the locked position and may be movable relative to the base portion 104 (about the first axis 80) when the locking lever 70 is in the unlocked position. Meanwhile, the handlebar 52 may fit relatively snugly within the bar clamp 118. Thus, the bar clamp 118 defines the second axis 82 via a receiving orifice 119 that receives the handlebar 52. The top 116 may extend away from the bar clamp 118 to face the base 115. When the locking lever 70 is in the unlocked position, the top 116 may be spaced farther apart from the base 115 so that the bar clamp 118 is relaxed and the handlebar 52 is rotatable about the second axis 82 and/or translatable along the second axis 82. However, when the locking lever 70 is in the locked position, the top 116 is drawn closer toward the base 115 so that the bar clamp 118 is constricted and tightly engages the handlebar 52 to prevent the handlebar 52 from rotating about the second axis 82 and/or translating along the second axis 82.

Although the interface between the base 115 and the base portion 104 includes the protrusions 105 as described above, it should be appreciated that the interface may include other structures in some alternative embodiments. For example, in some cases, the interface may include one or more pins, rods or other such structures that may be configured to fit (when properly aligned) within one or more corresponding receiving orifices positioned in the interface.

In some embodiments, it is desirable to provide a biasing for the translational and/or rotational position of the handlebar 52 along and/or around the second axis 82. To provide such biasing, one or more corresponding biasing elements may be provided (e.g., in the form of a compression or torsion spring). Such biasing elements may be positioned to bias the handlebar 52 to a desired orientation by, for example, providing a detent on the handlebar 52 and then providing another detent at a point on the clamp portion 110 to bias relative to rotation about the second axis 82 and/or providing the other detent at a point on the clamp portion to bias the handlebar 52 to be translated along the second axis 82 in a desired position. In some embodiments, the handlebar 52 further includes an adjustable stop (see element 200 on FIG. 2) positioned thereon. The adjustable stop 200 (if employed) may be fixable at an operator selected location along the longitudinal length of the handlebar 52 between the handles 54 to define a lateral limit for sliding of the handlebar along the second axis 82. In some cases, the adjustable stop 200 may be fixable at an operator selected location, and a biasing element (e.g., a spring 210) is provided to engage the adjustable stop 200 and a portion of the handle coupler 60 to bias the handlebar away from a rotated position to a rest position in which the first and second handles are oriented for operator gripping during operation of the handheld device.

The locking lever 70 may include a cam portion 120 and an arm portion 122 that forms the lever for the locking lever 70. The cam portion 120 may be disposed to contact the top 116 of the clamp portion 110 at one end of the arm portion 122. The locking lever 70 may be operably coupled to the steering tower 100 by a locking nut 124 that may be anchored at one end within the steering tower 100 and may extend from the steering tower 100 through a center of the rotational hub 106 and through an opening in the base 115 and the top to the other end, which may be anchored within the locking lever 70 at the cam portion 120. The locking nut 124 may define a fixed length between the respective anchor points, however, the cam portion 120 may rotate about a cam axis 126 (e.g., an axis of rotation of the locking lever 70) to present respective different cam diameters based on a position of the locking lever 70. In this regard, as shown in FIGS. 6 and 7, a locking diameter 130 may be presented to the top 116 of the clamp portion 110 when the locking lever 70 is in the locked position. Meanwhile, if the locking lever 70 is rotated about the cam axis 126 as shown by arrow 132 to the unlocked position, then an unlock diameter 134, which is smaller than the locking diameter 130, may be presented to the top 116 of the clamp portion 110. When the locking diameter is presented, the cam portion 120 may exert a locking force to push the top 116 toward the base 115 and to draw the base 115 onto the base portion 104 to lock the clamp portion 110 to the steering tower 100 so that rotation about the first axis 80 is not possible, and to lock the bar clamp 118 to the handlebar 52 so that rotation or translation relative to the second axis 82 is not possible. The cam portion 120 may have a slot 140 provided therein to permit the locking nut 124 to remain fixed while the cam portion 120 is rotated about the cam axis 126. Accordingly, when the locking lever 70 is rotated about the cam axis 126, the cam portion 120 exerts different pressures on the clamp portion 110 of the handlebar coupler 60 to alternately lock and unlock the handlebar coupler 60. Furthermore, as mentioned above, intermediate positions may also be provided so that the locking and/or unlocking may be performed in stages.

As may be appreciated from the description above, the locking lever 70 may provide a relatively easy way for the operator 15 to use one hand to shift between locked and unlocked positions of the locking lever 70. When the locking lever 70 is in the unlocked position, the operator 15 may relatively easily reposition the handlebar 52 about either or both of the first and second axes 80 and 82 to achieve a comfortable orientation in the operating position, or to shift the assembly to a transport or storage position. The locking lever 70 may then easily (again with one hand) be operated to lock the handle coupler 60. Biasing of any desirable type may further be provided to facilitate the movement between positions. The movements of the parts involved may be easily initiated and intuitive to appreciate. Thus, the operator 15 may further enjoy the flexibility and utility of the device. It should be noted, however, that although the locking lever 70 is provided at the distal end of the steering tower 100 relative to the support shaft 45, the locking lever 70 could alternatively be positioned at any point on, along or in the steering tower 100.

In accordance with an example embodiment, a handheld device is provided. The handheld device includes a support shaft, a power source, a working assembly operably coupled to the support shaft and powered by the power source to facilitate performance of a working function of the handheld device, and a handle assembly operably coupled to the support shaft. The handle assembly includes a handlebar coupling a first handle disposed at one end of the handlebar and a second handle disposed at an opposing end of the handlebar, a handlebar coupler rotatably coupling the support shaft and the handle assembly, and a locking lever. The handlebar coupler is configured to selectively enable rotation of the handlebar about a first axis and a second axis based on a position of the locking lever.

The device of some embodiments may include additional features that may be optionally added. For example, in some embodiments, (1) the handlebar coupler may enable rotation of the handlebar about the first axis between an operating position in which a line between the first and second handles is more than about thirty degrees out of alignment with the support shaft and a transport position in which the line between the first and second handles is less than about thirty degrees out of alignment with the support shaft. In an example embodiment, (2) the first axis is substantially orthogonal or perpendicular to the second axis. In some cases, (3) the handlebar is further enabled to slide along the second axis based on a position of the locking lever. In some embodiments, (4) the handle coupler further comprises a steering tower extending substantially orthogonal to the support shaft defining the first axis, and a clamp portion of the handlebar coupler is supported at a distal end of the steering tower. In an example embodiment, (5) the locking lever includes a cam portion housing an axis of rotation of the locking lever and an arm portion extending away from the cam portion. Responsive to rotation of the locking lever about the axis of rotation, the cam portion exerts different pressures on the handlebar coupler to alternately lock and unlock the handlebar coupler. In some embodiments, (6) the arm portion extends substantially along the steering tower when the locking lever locks the handlebar coupler, and the arm portion is rotated about the axis of rotation to be spaced apart from the steering tower when the locking lever unlocks the handlebar coupler. In some cases, (7) the locking lever unlocks the handlebar coupler in stages including a first stage in which rotation about the second axis is enabled, and a second stage in which rotation about the first axis is enabled. In an example embodiment, (8) the locking lever unlocks the handlebar coupler in stages including a first stage in which rotation about and sliding along the second axis are enabled, and a second stage in which rotation about the first axis is enabled.

In some embodiments, any or all of (1) to (8) may be employed in addition to the optional modifications or augmentations described below. For example, in some embodiments, the locking lever is rotated about 45 degrees away from alignment with the first axis to the first stage and is rotated at least 90 degrees away from alignment with the first axis to the second stage. Additionally or alternatively, a biasing element may be provided to facilitate rotation of the handlebar about at least one of the first axis or the second axis. Additionally or alternatively, a first biasing element may be provided to facilitate rotation of the handlebar about the first axis and a second biasing element is provided to facilitate rotation of the handlebar about the second axis. Additionally or alternatively, a first spring may be provided coaxial with the first axis to facilitate rotation of the handlebar about the first axis from a transport position to an operating position. Additionally or alternatively, a second spring may be provided coaxial with the second axis to facilitate rotation of the handlebar about the second axis from a rotated position to an operator selected rest position. Additionally or alternatively, a first spring may be provided coaxial with the first axis to facilitate rotation of the handlebar about the first axis from a transport position to an operating position and a second spring may be provided coaxial with the second axis to facilitate rotation of the handlebar about the second axis from a rotated position (e.g., the transport position) to an operator selected rest position (e.g., the operating position). Additionally or alternatively, the working assembly may include a cutting head of a trimmer. Additionally or alternatively, the handlebar may further include an adjustable stop positioned thereon, the adjustable stop being fixable at an operator selected location of the handlebar between the handles to define a lateral limit for sliding of the handlebar along the second axis. Additionally or alternatively, the adjustable stop may be fixable at an operator selected location of the handlebar between the handles, and a biasing element is provided to engage the adjustable stop and a portion of the handlebar to bias the handlebar away from a rotated position (e.g., the transport position) to a rest position in which the first and second handles are oriented for operator gripping during operation of the handheld device (e.g., the operating position). Additionally or alternatively, the handlebar may be substantially straight extending between the first and second handles, and the first and second handles may extend substantially orthogonally away from the handlebar. Additionally or alternatively, the handlebar may rotate substantially within a plane that is parallel to the support shaft.

## Claims

1. A handheld device (10) comprising:
a support shaft (45);
a power source (30);
a working assembly (20) operably coupled to the support shaft (45) and powered by the power source (30) to facilitate performance of a working function of the handheld device (10); and
a handle assembly (50) operably coupled to the support shaft (45), the handle assembly (50) including:
a handlebar (52) coupling a first handle (54) disposed at one end of the handlebar (52) and a second handle (54) disposed at an opposing end of the handlebar (52),
a handlebar coupler (60) rotatably coupling the support shaft (45) and the handle assembly (50), and
a locking lever (70),
wherein a first axis (80) is aligned with a longitudinal centerline of the handlebar coupler (60) and a second axis (82) remaining substantially orthogonal to the first axis (80), **characterized in that** the handlebar coupler (60) is configured to selectively enable rotation of the handlebar (52) about the first axis (80) and the second axis (82) based on a position of the locking lever (70) so that the handle assembly (50) is rotatable between an operating position and a transport or storage position.

2. The handheld device (10) of claim 1, wherein the handlebar coupler (60) is configured to enable rotation of the handlebar (52) about the first axis (80) between the operating position in which a line between the first and second handles (54) is more than thirty degrees out of alignment with the support shaft (45) and the transport position in which the line between the first and second handles (54) is less than thirty degrees out of alignment with the support shaft (45).

3. The handheld device (10) of claim 1, wherein when the handlebar (52) is rotated about the first axis (80), the second axis (82) is ranged from being aligned substantially parallel to the longitudinal centerline of the device (10) to being substantially perpendicular to the longitudinal centerline of the device (10), while always remaining substantially orthogonal to the longitudinal centerline of the handlebar coupler 60.

4. The handheld device (10) of claims 1- 3, wherein the handlebar (52) is further enabled to slide along the second axis (82) based on a position of the locking lever (70).

5. The handheld device (10) of claim 1, further comprising a steering tower (100) extending substantially orthogonal to the support shaft (45) defining the first axis (80), the handlebar coupler (60) being supported at a distal end of the steering tower (100).

6. The handheld device (10) of claims 1-5, wherein the locking lever (70) comprises a cam portion (120) housing an axis (126) of rotation of the locking lever (70) and an arm portion (122) extending away from the cam portion (126), and wherein, responsive to rotation of the locking lever (70) about the axis (126) of rotation, the cam portion (110) exerts different pressures on a clamp portion (110) of the handlebar coupler (60) to alternately lock and unlock the handlebar coupler (60).

7. The handheld device (10) of claim 6, wherein the arm portion (122) extends substantially along the steering tower (100) when the locking lever (70) locks the handlebar coupler (60), and wherein the arm portion (122) is rotated about the axis of rotation to be spaced apart from the steering tower (100) when the locking lever (70) unlocks the handlebar coupler (60).

8. The handheld device (1) of claims 1-7, wherein the locking lever (70) unlocks the handlebar coupler (60) in stages including a first stage in which rotation about and sliding along the second axis (82) are enabled, and a second stage in which rotation about the first axis (80) is enabled and
, wherein a biasing element (114) is provided to facilitate rotation of the handlebar (52) about at least one of the first axis (80) and the second axis (82).

9. The handheld device (10) of any of claims 1 to 8, wherein a first biasing element (114) is provided to facilitate rotation of the handlebar (52) about the first axis (80) and a second biasing element is provided to facilitate rotation of the handlebar (52) about the second axis (82).

10. The handheld device (10) of any of claims 1 to 9, wherein a first spring is provided coaxial with the first axis (80) to facilitate rotation of the handlebar (52) about the first axis (80) from a transport position to an operating position and wherein a second spring is provided coaxial with the second axis (82) to facilitate rotation of the handlebar (52) about the second axis (82) from a rotated position to an operator selected rest position.

11. The handheld device (10) of any of claims 1 to 9, wherein the working assembly (20) comprises a cutting head (25) of a trimmer.

12. The handheld device (10) of any of claims 1 to 9, wherein the handlebar (52) further comprises an adjustable stop (200) positioned thereon, the adjustable stop (200) being fixable at an operator selected location of the handlebar (52) between the handles (54) to define a lateral limit for sliding of the handlebar (52) along the second axis (82).

13. The handheld device (10) of any of claims 1 to 9, wherein the handlebar (52) further comprises an adjustable stop (200) positioned thereon, the adjustable stop (200) being fixable at an operator selected location of the handlebar 852) between the handles (54), and
wherein a biasing element (210) is provided to engage the adjustable stop and a portion of the handlebar (52) to bias the handlebar (52) away from a rotated position to a rest position in which the first and second handles (54) are oriented for operator gripping during operation of the handheld device (10).

14. The handheld device (10) of any of claims 1 to 9, wherein the handlebar (52) is rotatable s substantially within a plane that is parallel to the support shaft (45).

15. A handle assembly (50) for the handheld device (10) of any of claims 1 to 9 that employs a working assembly (20) operably coupled to a support shaft (45) and powered by a power source (30) to facilitate performance of a working function via operation of the working assembly (20), the handle assembly (50) comprising:
a handlebar (52) coupling a first handle (54) disposed at one end of the handlebar (52) and a second handle (54) disposed at an opposing end of the handlebar (52);
a handlebar coupler (60) rotatably coupling the support shaft (45) and the handle assembly (50), and
a locking lever (70),
wherein a first axis (80) is aligned with a longitudinal centerline of the handlebar coupler (60) and a second axis (82) remaining substantially orthogonal to the first axis (80) **characterized in that**
the handlebar coupler (60) is configured to selectively enable rotation of the handlebar (52) about the first axis (80) and the second axis (82) based on a position of the locking lever (70).

16. The handle assembly (50) of claim 15, further comprising a steering tower (100) extending substantially orthogonal to the support shaft (45) defining the first axis (80), the handlebar coupler (60) being supported at a distal end of the steering tower (100).

17. The handle assembly (50) of claim 15, wherein the locking lever (70) comprises a cam portion (120) housing an axis (126) of rotation of the locking lever (70) and an arm portion (122) extending away from the cam portion (120), and wherein, responsive to rotation of the locking lever (70) about the axis of rotation, the cam portion (120) exerts different pressures on a clamp portion of the handlebar coupler (60) to alternately lock and unlock the handlebar coupler (60).

18. The handle assembly (50) of claim 17, wherein the arm portion (122) extends substantially along the steering tower (100) when the locking lever (70) locks the handlebar coupler (60), and wherein the arm portion (122) is rotated about the axis of rotation to be spaced apart from the steering tower (100) when the locking lever (70) unlocks the handlebar coupler (60).

## Patentansprüche

1. Handwerkzeug (10) umfassend:
eine Trägerwelle (45);
eine Leistungsquelle (30);
eine Werkzeuganordnung (20), die betätigbar an der Trägerwelle (45) angeordnet ist und durch die Leistungsquelle (30) mit Leistung versorgt wird, um die Ausführung einer Arbeitsfunktion des Handwerkzeugs (10) zu ermöglichen; und
eine Handgriffanordnung (50), die betätigbar mit der Trägerwelle (45) gekoppelt ist, wobei die Handgriffanordnung (50) umfasst:
eine Handgriffstange (52), die einen ersten Handgriff (54), der an einem Ende der Handgriffstange (52) angeordnet ist, mit einem zweiten Handgriff (54) koppelt, der an einem entgegengesetzten Ende der Handgriffstange (53) angeordnet ist,
eine Handgriffstangen-Kopplungsvorrichtung (60), die die Trägerwelle (45) drehbar mit der Handgriffanordnung (50) koppelt, und
einen Verriegelungshebel (70),
wobei eine erste Achse (80) mit einer Längsmittellinie der Handgriffstangen-Kopplungsvorrichtung (60) ausgerichtet ist, und eine zweite Achse (82) im Wesentlichen senkrecht auf die erste Achse (80) bleibt,
**dadurch gekennzeichnet, dass** die Handgriffstangen-Kopplungsvorrichtung (60) dazu ausgestaltet ist, selektiv die Drehung der Handgriffstange (52) um die erste Achse (80) und die zweite Achse (82) auf Grundlage einer Stellung des Verriegelungshebels (70) zu ermöglichen, so dass die Handgriffanordnung (50) zwischen einer Arbeitsstellung und einer Transport- oder Lagerstellung drehbar ist.

2. Handwerkzeug (10) nach Anspruch 1, wobei die Handgriffstangen-Kopplungsvorrichtung (60) dazu ausgestaltet ist, die Drehung der Handgriffstange (52) um die erste Achse (80) zwischen der Arbeitsstellung, in der eine Linie zwischen den ersten und zweiten Handgriffen (54) mehr als dreißig Grad von der Ausrichtung mit der Trägerwelle (45) abweicht, und der Transportstellung, in der die Linie zwischen den ersten und zweiten Handgriffen (54) weniger als dreißig Grad von der Ausrichtung mit der Trägerwelle (45) abweicht, zu ermöglichen.

3. Handwerkzeug (10) nach Anspruch 1, wobei, wenn die Handgriffstange (52) um die erste Achse (80) gedreht wird, die zweite Achse (82) von der im Wesentlichen mit der Längsmittellinie der Vorrichtung (10) parallelen Ausrichtung auf eine im Wesentlichen auf die Längsmittellinie der Vorrichtung (10) senkrechte Ausrichtung verschoben wird, während sie stets im Wesentlichen senkrecht auf die Längsmittellinie der Handgriffstangen-Kopplungsvorrichtung 60 bleibt.

4. Handwerkzeug (10) nach den Ansprüchen 1 bis 3, wobei die Handgriffstange (52) ferner in der Lage ist, auf Grundlage einer Stellung des Verriegelungshebels (70) entlang der zweiten Achse (82) zu gleiten.

5. Handwerkzeug (10) nach Anspruch 1, ferner umfassend eine Lenksäule (100), die sich im Wesentlichen senkrecht auf die Trägerwelle (45) erstreckt, die die erste Achse (80) definiert, wobei die Handgriffstangen-Kopplungsvorrichtung (60) an einem distalen Ende der Lenksäule (100) getragen wird.

6. Handwerkzeug (10) nach den Ansprüche 1 bis 5, wobei der Verriegelungshebel (70) einen Nockenabschnitt (120), der eine Drehachse (126) des Verriegelungshebels (70) umgibt, und einen Armabschnitt (122) umfasst, der sich von dem Nockenabschnitt (126) weg erstreckt, und wobei, in Ansprechen auf die Drehung des Verriegelungshebels (70) um die Drehachse (126), der Nockenabschnitt (110) unterschiedliche Drücke auf einen Klemmabschnitt (110) der Handgriffstangen-Kopplungsvorrichtung (60) ausübt, um die Handgriffstangen-Kopplungsvorrichtung (60) abwechselnd zu verriegeln und zu entriegeln.

7. Handwerkzeug (10) nach Anspruch 6, wobei der Armabschnitt (122) sich im Wesentlichen entlang der Lenksäule (100) erstreckt, wenn der Verriegelungshebel (70) die Handgriffstangen-Kopplungsvorrichtung (60) verriegelt, und wobei der Armabschnitt (122) um die Drehachse gedreht wird, um von der Lenksäule (100) beabstandet zu sein, wenn der Verriegelungshebel (70) die Handgriffstangen-Kopplungsvorrichtung (60) entriegelt.

8. Handwerkzeug (1) nach den Ansprüchen 1 bis 7, wobei der Verriegelungshebel (70) die Handgriffstangen-Kopplungsvorrichtung (60) stufenweise entriegelt, wobei die Stufen eine erste Stufe, in der die Drehung um und ein Gleiten entlang der zweiten Achse (82) ermöglicht werden, und eine zweite Stufe umfassen, in der die Drehung um die erste Achse (80) ermöglicht wird, und
wobei ein Vorspannelement (114) vorgesehen ist, um die Drehung der Handgriffstange (52) um zumindest eine von erster Achse (80) und zweiter Achse (82) zu erleichtern.

9. Handwerkzeug (10) nach einem der Ansprüche 1 bis 8, wobei ein erstes Vorspannelement (114) vorgesehen ist, um die Drehung der Handgriffstange (52) um die erste Achse (80) zu erleichtern, und ein zweites Vorspannelement vorgesehen ist, um die Drehung der Handgriffstange (52) um die zweite Achse (82) zu erleichtern.

10. Handwerkzeug (10) nach einem der Ansprüche 1 bis 9, wobei eine erste Feder koaxial mit der ersten Achse (80) vorgesehen ist, um die Drehung der Handgriffstange (52) um die erste Achse (80) aus einer Transportstellung in eine Arbeitsstellung zu erleichtern, und wobei eine zweite Feder koaxial mit der zweiten Achse (82) vorgesehen ist, um die Drehung der Handgriffstange (52) um die zweite Achse (82) aus einer gedrehten Stellung in eine von einer Bedienperson gewählte Ruhestellung zu erleichtern.

11. Handwerkzeug (10) nach einem der Ansprüche 1 bis 9, wobei die Werkzeuganordnung (20) einen Schneidkopf (25) eines Trimmers umfasst.

12. Handwerkzeug (10) nach einem der Ansprüche 1 bis 9, wobei die Handgriffstange (52) ferner einen daran positionierten einstellbaren Anschlag (200) umfasst, wobei der einstellbare Anschlag (200) an einer durch die Bedienperson auswählbaren Stelle der Handgriffstange (52) zwischen den Handgriffen (54) fixierbar ist, um eine seitliche Begrenzung für das Verschieben der Handgriffstange (52) entlang der zweiten Achse (82) zu definieren.

13. Handwerkzeug (10) nach einem der Ansprüche 1 bis 9, wobei die Handgriffstange (52) ferner einen daran positionierten einstellbaren Anschlag (200) umfasst, wobei der einstellbare Anschlag (200) an einer durch die Bedienperson auswählbaren Stelle der Handgriffstange (52) zwischen den Handgriffen (54) fixierbar ist, und wobei ein Vorspannelement (210) vorgesehen ist, um in den einstellbaren Anschlag und einen Abschnitt des Handgriffs (52) einzugreifen, um den Handgriff (52) von der gedrehten Stellung in eine Ruhestellung vorzuspannen, in der die ersten und zweiten Handgriffe (54) so orientiert sind, dass eine Bedienperson sie während des Betriebs des Handwerkzeugs (10) ergreifen kann.

14. Handwerkzeug (10) nach einem der Ansprüche 1 bis 9, wobei die Handgriffstange (52) im Wesentlichen innerhalb einer Ebene drehbar ist, die parallel zu der Trägerwelle (45) ist.

15. Handgriffanordnung (50) für das Handwerkzeug (10) nach einem der Ansprüche 1 bis 9, das eine Werkzeuganordnung (20), die betätigbar mit einer Trägerwelle (45) gekoppelt ist und von einer Leistungsquelle (30) mit Leistung versorgt ist, einsetzt, um die Ausführung einer Arbeitsfunktion durch Betätigung der Werkzeuganordnung (20) zu erleichtern, wobei die Handgriffanordnung (50) umfasst:
eine Handgriffstange (52), die einen ersten Handgriff (54), der an einem Ende der Handgriffstange (52) angeordnet ist, mit einem zweiten Handgriff (54) koppelt, der an einem entgegengesetzten Ende der Handgriffstange (52) angeordnet ist;
eine Handgriffstangen-Kopplungsvorrichtung (60), die die Trägerwelle (45) drehbar mit der Handgriffanordnung (50) koppelt, und
einen Verriegelungshebel (70),
wobei eine erste Achse (80) mit einer Längsmittellinie der Handgriffstangen-Kopplungsvorrichtung (60) ausgerichtet ist, und eine zweite Achse (82) im Wesentlichen senkrecht auf die erste Achse (80) bleibt, **dadurch gekennzeichnet, dass** die Handgriffstangen-Kopplungsvorrichtung (60) dazu ausgestaltet ist, selektiv die Drehung der Handgriffstange (52) um die erste Achse (80) und die zweite Achse (82) auf Grundlage einer Stellung des Verriegelungshebels (70) zu ermöglichen.

16. Handgriffanordnung (50) nach Anspruch 15, ferner umfassend eine Lenksäule (100), die sich im Wesentlichen senkrecht auf die Trägerwelle (45) erstreckt, die die erste Achse (80) definiert, wobei die Handgriffstangen-Kopplungsvorrichtung (60) an einem distalen Ende der Lenksäule (100) getragen wird.

17. Handgriffanordnung (50) nach Anspruch 15, wobei der Verriegelungshebel (120) einen Nockenabschnitt (126), der eine Drehachse (70) des Verriegelungshebels (122) umgibt, und einen Armabschnitt (120) umfasst, der sich von dem Nockenabschnitt (70) weg erstreckt, und wobei, in Ansprechen auf die Drehung des Verriegelungshebels (120) um die Drehachse (60), der Nockenabschnitt (60) unterschiedliche Drücke auf einen Klemmabschnitt (110) der Handgriffstangen-Kopplungsvorrichtung (60) ausübt, um die Handgriffstangen-Kopplungsvorrichtung (60) abwechselnd zu verriegeln und zu entriegeln.

18. Handgriffanordnung (50) nach Anspruch 17, wobei der Armabschnitt (122) sich im Wesentlichen entlang der Lenksäule (100) erstreckt, wenn der Verriegelungshebel (70) die Handgriffstangen-Kopplungsvorrichtung (60) verriegelt, und wobei der Armabschnitt (122) um die Drehachse gedreht wird, um von der Lenksäule (100) beabstandet zu sein, wenn der Verriegelungshebel (70) die Handgriffstangen-Kopplungsvorrichtung (60) entriegelt.

## Revendications

1. Dispositif portatif (10) comprenant :
un arbre de support (45) ;
une source d'alimentation (30) ;
un ensemble de travail (20) couplé de manière fonctionnelle à l'arbre de support (45) et alimenté par la source d'alimentation (30) pour faciliter l'exécution d'une fonction de travail du dispositif portatif (10) ; et
un ensemble poignée (50) couplé de manière fonctionnelle à l'arbre de support (45), l'ensemble poignée (50) comportant :
un mancheron (52) couplant une première poignée (54) disposée au niveau d'une extrémité du mancheron (52) et une deuxième poignée (54) disposée au niveau d'une extrémité opposée du mancheron (52),
un coupleur de mancheron (60) couplant en rotation l'arbre de support (45) et l'ensemble poignée (50), et
un levier de verrouillage (70),
dans lequel un premier axe (80) est aligné avec une ligne centrale longitudinale du coupleur de mancheron (60) et un deuxième axe (82) restant essentiellement orthogonal au premier axe (80),
**caractérisé en ce que** le coupleur de mancheron (60) est configuré pour permettre de manière sélective la rotation du mancheron (52) autour du premier axe (80) et du deuxième axe (82) sur la base d'une position du levier de verrouillage (70) de sorte que l'ensemble poignée (50) puisse tourner entre une position de fonctionnement et une position de transport ou de stockage.

2. Dispositif portatif (10) de la revendication 1, dans lequel le coupleur de mancheron (60) est configuré pour permettre la rotation du mancheron (52) autour du premier axe (80) entre la position de fonctionnement dans laquelle une ligne entre les première et deuxième poignées (54) est décalée de plus de trente degrés par rapport à l'arbre de support (45) et la position de transport dans laquelle la ligne entre les première et deuxième poignées (54) est décalée de moins de trente degrés par rapport à l'arbre de support (45).

3. Dispositif portatif (10) de la revendication 1, dans lequel, lorsque le mancheron (52) tourne autour du premier axe (80), le deuxième axe (82) varie de l'état aligné essentiellement parallèle à la ligne centrale longitudinale du dispositif (10) à l'état essentiellement perpendiculaire à la ligne centrale longitudinale du dispositif (10), tout en restant toujours essentiellement orthogonal à la ligne centrale longitudinale du coupleur de mancheron (60).

4. Dispositif portatif (10) des revendications 1 à 3, dans lequel le mancheron (52) est en outre autorisé à coulisser le long du deuxième axe (82) sur la base d'une position du levier de verrouillage (70).

5. Dispositif portatif (10) de la revendication 1, comprenant en outre une tour de direction (100) s'étendant de manière essentiellement orthogonale à l'arbre de support (45) définissant le premier axe (80), le coupleur de mancheron (60) étant supporté au niveau d'une extrémité distale de la tour de direction (100).

6. Dispositif portatif (10) des revendications 1 à 5, dans lequel le levier de verrouillage (70) comprend une partie de came (120) recevant un axe (126) de rotation du levier de verrouillage (70) et une partie de bras (122) s'étendant loin de la partie de came (126), et dans lequel, en réponse à la rotation du levier de verrouillage (70) autour de l'axe (126) de rotation, la partie de came (110) exerce différentes pressions sur une partie de serrage (110) du coupleur de mancheron (60) pour verrouiller et déverrouiller alternativement le coupleur de mancheron (60) .

7. Dispositif portatif (10) de la revendication 6, dans lequel la partie de bras (122) s'étend essentiellement le long de la tour de direction (100) lorsque le levier de verrouillage (70) verrouille le coupleur de mancheron (60), et dans lequel la partie de bras (122) tourne autour de l'axe de rotation de manière à être espacée de la tour de direction (100) lorsque le levier de verrouillage (70) déverrouille le coupleur de mancheron (60).

8. Dispositif portatif (1) des revendications 1 à 7, dans lequel le levier de verrouillage (70) déverrouille le coupleur de mancheron (60) par étages comportant un premier étage dans lequel la rotation autour et le coulissement le long du deuxième axe (82) sont autorisés, et un deuxième étage dans lequel la rotation autour du premier axe (80) est autorisée et,
dans lequel un élément de sollicitation (114) est prévu pour faciliter la rotation du mancheron (52) autour d'au moins l'un du premier axe (80) et du deuxième axe (82) .

9. Dispositif portatif (10) de l'une des revendications 1 à 8, dans lequel un premier élément de sollicitation (114) est prévu pour faciliter la rotation du mancheron (52) autour du premier axe (80) et un deuxième élément de sollicitation est prévu pour faciliter la rotation du mancheron (52) autour du deuxième axe (82).

10. Dispositif portatif (10) de l'une des revendications 1 à 9, dans lequel un premier ressort est prévu de manière coaxiale au premier axe (80) pour faciliter la rotation du mancheron (52) autour du premier axe (80) d'une position de transport à une position de fonctionnement et dans lequel un deuxième ressort est prévu de manière coaxiale au deuxième axe (82) pour faciliter la rotation du mancheron (52) autour du deuxième axe (82) d'une position de rotation à une position de repos sélectionnée par un opérateur.

11. Dispositif portatif (10) de l'une des revendications 1 à 9, dans lequel l'ensemble de travail (20) comprend une tête de coupe (25) d'un taille-bordures.

12. Dispositif portatif (10) de l'une des revendications 1 à 9, dans lequel le mancheron (52) comprend en outre une butée réglable (200) positionnée sur celui-ci, la butée réglable (200) pouvant être fixée à un emplacement sélectionné par un opérateur du mancheron (52) entre les poignées (54) pour définir une limite latérale pour le coulissement du mancheron (52) le long du deuxième axe (82).

13. Dispositif portatif (10) de l'une des revendications 1 à 9, dans lequel le mancheron (52) comprend en outre une butée réglable (200) positionnée sur celui-ci, la butée réglable (200) pouvant être fixée à un emplacement sélectionné par un opérateur du mancheron (52) entre les poignées (54), et dans lequel un élément de sollicitation (210) est prévu pour s'engager avec la butée réglable et une partie du mancheron (52) pour solliciter le mancheron (52) loin d'une position de rotation vers une position de repos dans laquelle les première et deuxième poignées (54) sont orientées pour la préhension par l'opérateur pendant le fonctionnement du dispositif portatif (10) .

14. Dispositif portatif (10) de l'une des revendications 1 à 9, dans lequel le mancheron (52) peut tourner essentiellement dans un plan qui est parallèle à l'arbre de support (45).

15. Ensemble poignée (50) pour le dispositif portatif (10) de l'une des revendications 1 à 9 qui utilise un ensemble de travail (20) couplé de manière fonctionnelle à un arbre de support (45) et alimenté par une source d'alimentation (30) pour faciliter l'exécution d'une fonction de travail par le fonctionnement de l'ensemble de travail (20), l'ensemble poignée (50) comprenant :
un mancheron (52) couplant une première poignée (54) disposée au niveau d'une extrémité du mancheron (52) et une deuxième poignée (54) disposée au niveau d'une extrémité opposée du mancheron (52) ;
un coupleur de mancheron (60) couplant en rotation l'arbre de support (45) et l'ensemble poignée (50), et
un levier de verrouillage (70),
dans lequel un premier axe (80) est aligné avec une ligne centrale longitudinale du coupleur de mancheron (60) et un deuxième axe (82) restant essentiellement orthogonal au premier axe (80),
**caractérisé en ce que**
le coupleur de mancheron (60) est configuré pour permettre de manière sélective la rotation du mancheron (52) autour du premier axe (80) et du deuxième axe (82) sur la base d'une position du levier de verrouillage (70).

16. Ensemble poignée (50) de la revendication 15, comprenant en outre une tour de direction (100) s'étendant de manière essentiellement orthogonale à l'arbre de support (45) définissant le premier axe (80), le coupleur de mancheron (60) étant supporté au niveau d'une extrémité distale de la tour de direction (100).

17. Ensemble poignée (50) de la revendication 15, dans lequel le levier de verrouillage (70) comprend une partie de came (120) recevant un axe (126) de rotation du levier de verrouillage (70) et une partie de bras (122) s'étendant loin de la partie de came (120), et dans lequel, en réponse à la rotation du levier de verrouillage (70) autour de l'axe de rotation, la partie de came (120) exerce différentes pressions sur une partie de serrage du coupleur de mancheron (60) pour verrouiller et déverrouiller alternativement le coupleur de mancheron (60).

18. Ensemble poignée (50) de la revendication 17, dans lequel la partie de bras (122) s'étend essentiellement le long de la tour de direction (100) lorsque le levier de verrouillage (70) verrouille le coupleur de mancheron (60), et dans lequel la partie de bras (122) tourne autour de l'axe de rotation de manière à être espacée de la tour de direction (100) lorsque le levier de verrouillage (70) déverrouille le coupleur de mancheron (60).
